# EUROPÄISCHE PATENTSCHRIFT

(11) **EP 0 547 443 B1**
(45) Veröffentlichungstag und Bekanntmachung des Hinweises auf die Patenterteilung: **21.02.1996**
(21) Anmeldenummer: 92120654.6
(22) Anmeldetag: 03.12.1992
(51) Int. Cl.: F42B 3/182, H01R 29/00, B60R 21/32

(54) **Elektrische Steckverbindung an einem mit elektrischem Zünder versehenen pyrotechnischen Gasgenerator**
Electric connector on a pyrotechnic gas generator provided with an electric igniter
Connecteur électrique sur un générateur de gaz pyrotechnique à allumeur électrique

(30) Priorität: 10.12.1991 DE 4140692
(43) Veröffentlichungstag der Anmeldung: 23.06.1993
(73) Patentinhaber: TRW Occupant Restraint Systems GmbH, D-73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- FR-A- 2 331 894
- FR-A- 2 554 280
- GB-A- 906 181
- GB-A- 2 025 711
- US-A- 4 358 135

## Beschreibung

Die Erfindung betrifft eine elektrische Steckverbindung gemäß dem Oberbegriff des Patentanspruchs 1.

Um bei pyrotechnischen Gasgeneratoren mit elektrischem Zünder eine ungewollte Zündung sicher zu verhindern, ist es zweckmäßig, die Kontaktteile mit einer Kurzschlußbrücke zu versehen, die erst unwirksam gemacht wird, wenn das Rückhaltesystem, beispielsweise ein Gurtaufroller mit pyrotechnischem Gurtstraffer oder ein Airbag-Modul, im Fahrzeug eingebaut wird. Eine solche Kurzschlußbrücke ist ein separates Teil, welches die Kontaktteile des Gasgenerators elektrisch miteinander verbindet.

Bei einer aus der GB-A-906 181 bekannten Steckverbindung der eingangs genannten Art tritt das erste Kontaktteil elektrisch mit einer direkt auf das Spreizteil des Anschlußsteckers aufgeschobenen Kontakthülse in Kontakt. Dieses gleichzeitig die Kontaktfeder bildende erste Kontaktteil ist an einer Klammer ausgebildet, die auf ein Zündergehäuse aufgeschoben ist.

Bei einer aus der GB-A-2 025 711 bekannten Steckverbindung sind bei nicht aufgestecktem Anschlußstecker beide Kontaktteile jeweils mit einer Kontaktfeder verbunden und über diese Kontaktfedern kurzgeschlossen. Bei aufgestecktem Anschlußstecker sind die beiden Kontaktfedern elektrisch gegenüber beiden Kontaktteilen isoliert. In das Spreizteil des Anschlußsteckers ist für jedes Kontaktteil jeweils eine innere Kontakthülse eingesetzt.

In der FR-A-2 331 894 ist eine Mehrfachkontakt-Steckverbindung beschrieben, bei der ein mit einer Umfangsrille versehener Kontaktstift mit einem umgebogenen, in die Umfangsrille eingreifenden Ende einer Kontaktfeder zusammenwirkt, die bei fehlendem Kontaktstift an einem weiteren Kontakt anliegt.

In der US-A-4 358 135 ist eine Steckverbindung beschrieben, bei der zwei Kontaktteile mit ihren abgebogenen Enden jeweils federnd an einem Massekontakt anliegen und durch ein auf den Massekontakt aufschiebbares, mit zwei äußeren Gegenkontakten versehenes Spreizteil eines Anschlußsteckers außer Eingriff mit dem Massekontakt gebracht werden.

Die Erfindung geht von der Erkenntnis aus, daß eine Sicherung des Gasgenerators mittels einer solchen Kurzschlußbrücke nicht optimal ist. Es kann prinzipiell nicht ausgeschlossen werden, daß ein Gasgenerator ohne Kurzschlußbrücke ausgeliefert wird oder diese verloren geht. Die Erfindung schlägt daher eine Ausbildung der Steckverbindung vor, bei der eine Überbrückung der Kontaktteile des Gasgenerators auch ohne separates Kurzschlußteil gewährleistet ist, solange der Anschlußstecker nicht aufgesetzt ist.

Durch die in den Ansprüchen angegebene Erfindung wird eine elektrische Steckverbindung der oben angegebenen Art geschaffen, bei der bei nicht aufgestecktem Anschlußstecker eine mit dem ersten Kontaktteil verbundene Kontaktfeder mit dem zweiten Kontaktteil in Berührung ist und so die Anschlüsse des elektrischen Zünders kurzschließt und bei der der Anschlußstecker mit einem Spreizteil versehen ist, das bei aufgestecktem Anschlußstekker die Kontaktfeder von dem zweiten Kontaktteil radial wegspreizt. Die mit dem ersten Kontaktteil verbundene Kontaktfeder liegt so lange unter Vorspannung an dem zweiten Kontaktteil an, bis der Anschlußstecker aufgesetzt wird und bei diesem Vorgang mit seinem Spreizteil unter die Kontaktfeder greift und diese von dem zweiten Kontaktteil abhebt. Der Kurzschlußbrücke für den elektrischen Zünder muß keinerlei Beachtung mehr geschenkt werden. Der damit verbundene Gewinn an Sicherheit und vereinfachter Handhabung wird mit einfachsten Mitteln erreicht, da nur die ohnehin benötigte Steckverbindung geeignet ausgebildet werden muß.

Gemäß einer Ausführungsform der Erfindung ist das Spreizteil durch eine Isolierbuchse gebildet, welche eine zu dem zweiten Kontaktteil komplementäre Kontakthülse umgibt und an ihrem dem Gasgenerator zugewandten Ende verjüngt ausgebildet ist. Die Kontaktfeder ist an ihrem freien Ende umgebogen. Die Isolierbuchse greift mit ihrem verjüngten Ende beim Aufschieben des Anschlußsteckers unter das umgebogene Ende der Kontaktfeder und hebt diese von dem zweiten Kontaktteil ab. Sie hält diese dann in sicherem Abstand von dem zweiten Kontaktteil.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen schematischen Teilschnitt einer Ausführungsform der Steckverbindung;
- Fig. 2: eine in bezug auf Fig. 4 um 90° verdrehte Schnittansicht des mit dem Anschlußstecker zu kuppelnden Endes des Gasgenerators; und
- Fig. 3: eine Explosionsansicht der in den Fig. 1 und 2 gezeigten Ausführungsform.

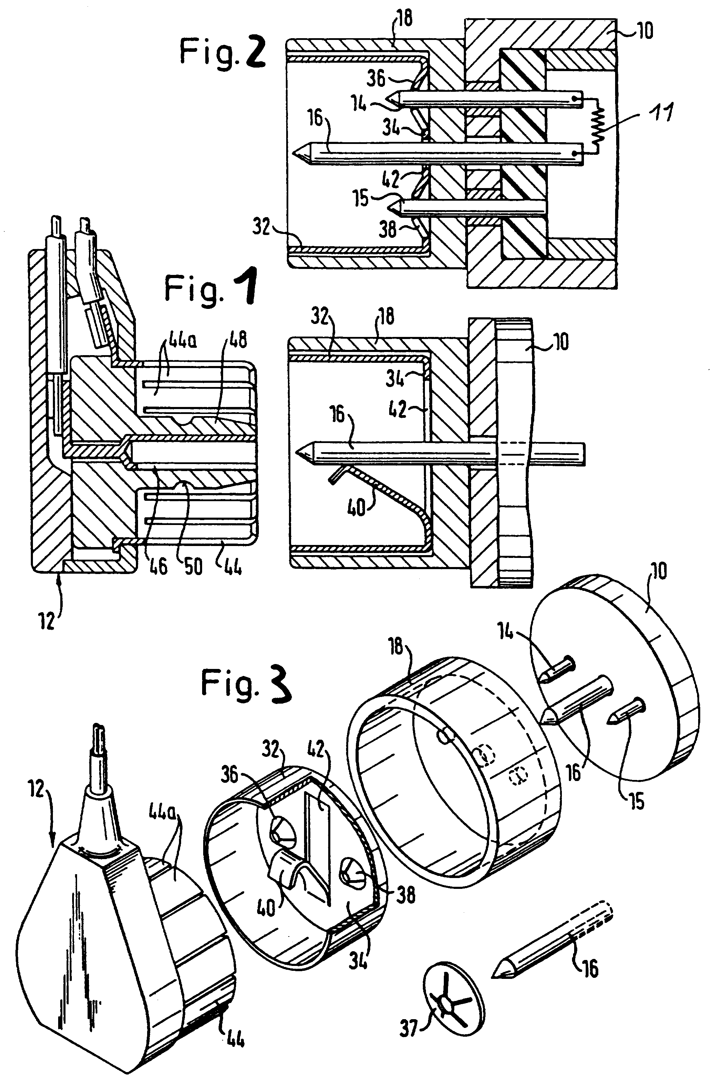

In den Fign. 1 und 2 ist von dem pyrotechnischen Gasgenerator 10 nur das Anschlußende gezeigt, auf welches ein Anschlußstecker 12 aufgesetzt wird. Der Gasgenerator 10 ist mit einem elektrischen Zünder versehen. Dieser besteht aus einer Zündpille 11, deren Anschlüsse mit zwei voneinander isolierten Kontaktteilen 14, 16 verbunden sind, die in Axialrichtung aus dem Gasgenerator herausgeführt sind. Das Kontaktteil 16 ist ein zu dem zylindrischen Gehäuse des Gasgenerators 10 koaxialer Kontaktstift. Das Kontaktteil 14 ist als ein neben dem Kontaktteil 16 angeordneter Kontaktstift. Ein zylindrischer Stecksockel 18 ist an seiner Basis mit der ihm zugewandten Stirnfläche des Gasgenerators 10 verbunden. Die Enden der Kontaktteile 14, 16 ragen in den Innenraum dieses Stecksockels 18 hinein.

Zusätzlich ragt ein Befestigungsstift 15 parallel zu den Kontaktteilen 14, 16 aus dem Stirnende des Gasgenerators 10 heraus in das Innere des Stecksockels 18. In den zylindrischen Innenraum des Stecksockels 18 ist eine zylindrische Kontaktbuchse 32 eingesetzt, in deren radialem Boden 34 zwei äußere Durchgangsöffnungen für den Befestigungsstift 15 und das Kontaktteil 14 gebildet sind. Zur Bildung dieser Durchgangsöffnungen ist deren Umfangsbereich am Boden 34 hochgewölbt und geschlitzt, so daß Spreizfederteile entstehen, die einen festen Sitz der äußeren Kontaktbuchse 32 auf den freien Enden des Kontaktteils 14 und des Befestigungsstiftes 15 bewirken. Zugleich wird der Stecksockel 18 am Anschlußende des Gasgenerators 10 gesichert. Die Spreizfederteile sind in Fig. 2 allgemein mit 36, 38 bezeichnet; wie in Fig. 3 angedeutet ist, können auch separate Spreizfederteile 37 verwendet werden.

Bei erhöhten Ansprüchen an Festigkeit und Kontaktsicherheit werden die freien Enden des Kontaktteils 14 und des Befestigungsstiftes 15 zusätzlich mit der Kontaktbuchse 32 verlötet.

Aus dem radialen Boden 34 ist in Diametralrichtung eine Kontaktfeder 40 ausgestanzt. Diese Kontaktfeder 40 ist an ihrem freien Ende umgebogen. Das durch Ausstanzen der Kontaktfeder 40 gebildete Fenster 42 in dem Boden 34 bildet eine Durchtrittsöffnung für das mittlere Kontaktteil 16.

Solange kein Anschlußstecker aufgesetzt ist, befindet sich die Kontaktfeder 40 in Berührung mit dem Außenumfang des Kontaktteils 16, so daß die Kontaktteile 14, 16 kurzgeschlossen sind, wie in Fig. 1 gezeigt.

Der Anschlußstecker 12 ist mit einer zylindrischen Kontaktbuchse 44 versehen, die in die äußere Kontaktbuchse 32 passend eingeschoben werden kann. Durch axiale Schlitze sind an der Kontaktbuchse 44 federnde Stege 44a gebildet, so daß die Kontaktbuchse 44 in Radialrichtung federnd nachgibt. Eine koaxiale, innere Kontakthülse 46 ist komplementär zu dem Ende des Kontaktteils 16 ausgebildet. Diese Kontakthülse 46 ist von einer Isolierbuchse 48 umgeben, die an ihrem dem Gasgenerator zugewandten Ende verjüngt ausgebildet ist.

Diese Isolierbuchse 48 bildet ein Spreizteil, dessen Stirnende beim Aufsetzen des Anschlußsteckers 12 auf den Gasgenerator 10 unter das umgebogene Ende der Kontaktfeder 40 greift und diese in Radialrichtung von dem Kontaktteil 16 wegspreizt. Beim weiteren Aufschieben des Anschlußsteckers 12 kommt das umgebogene Ende der Kontaktfeder 40 mit einer Umfangsrille 50 der Isolierbuchse 48 in Eingriff, um den Anschlußstecker 12 axial in dem Stecksockel 18 zu sichern.

Bei beiden Ausführungsformen ist der elektrische Zünder des Gasgenerators durch Kurzschließen der Kontaktteile 14, 16 immer dann gesichert, wenn der Anschlußstecker 12 nicht aufgesetzt ist. Die Entsicherung tritt zwangsläufig ein, wenn der Anschlußstecker 12 aufgesetzt wird.

## Patentansprüche

1. Elektrische Steckverbindung an einem mit elektrischem Zünder (11) versehenen pyrotechnischen Gasgenerator (10) für Rückhaltesysteme in Fahrzeugen, mit zwei aus dem elektrischen Zünder herausgeführten Kontaktteilen (14, 16) und einem Anschlußstecker (12), wobei bei nicht aufgestecktem Anschlußstecker (12) eine mit dem ersten Kontaktteil (14) verbundene Kontaktfeder (40) mit dem zweiten Kontaktteil (16) in Berührung ist und so die Anschlüsse des elektrischen Zünders (11) kurzschließt und wobei der Anschlußstecker (12) mit einem Spreizteil (48) versehen ist, das bei aufgestecktem Anschlußstecker (12) die Kontaktfeder (14) von dem zweien Kontaktteil (16) radial wegspreizt, dadurch gekennzeichnet, daß das erste Kontaktteil (14) mit einer zylindrischen äußeren Kontaktbuchse (32) verbunden ist, in die eine innere Kontaktbuchse (44) des Anschlußsteckers (12) einschiebbar ist, und daß die äußere Kontaktbuchse (32) einen radialen Boden (34) aufweist, aus dem die Kontaktfeder (40) ausgestanzt ist.

2. Steckverbindung nach Anspruch 1, dadurch gekennzeichnet, daß das Spreizteil (48) durch eine Isolierbuchse gebildet ist, welche eine zu dem zweiten Kontaktteil (16) komplementäre Kontakthülse (46) umgibt und an ihrem dem Gasgenerator (10) zugewandten Ende verjüngt ausgebildet ist, und daß die Kontaktfeder (40) an ihrem freien Ende umgebogen ist.

3. Steckverbindung nach Anspruch 2, dadurch gekennzeichnet, daß die Isolierbuchse (48) mit einer Umfangsrille (50) versehen ist, in die das umgebogene Ende der Kontaktfeder (40) eingreift.

4. Steckverbindung nach einem der vorhergehenden Ansprüche, dadurch gekennzeichnet, daß der radiale Boden (34) der äußeren Kontaktbuchse mit einer Öffnung zum Durchschieben des freien Endes des ersten, als Stift ausgebildeten Kontaktteils (14) versehen ist und das zweite, als Kontaktstift ausgebildete Kontaktteil (16) koaxial zu der äußeren Kontaktbuchse (32) durch das in dem radialen Boden (34) durch Ausstanzen der Kontaktfeder (40) gebildete Fenster (42) ragt.

5. Steckverbindung nach Anspruch 4, dadurch gekennzeichnet, daß der radiale Boden (34) der äußeren Kontaktbuchse (32) mit einer Öffung zum Durchschieben eines aus dem Gasgenerator (10) herausragenden Befestigungsstiftes (15) versehen ist.

## Claims

1. Electrical plug connection on a pyrotechnical gas generator (10) provided with an electrical igniter (11) for restraining systems in vehicles, comprising two contact members (14, 16) led out of the electrical igniter and a connector (12), wherein when the connector (12) is not attached a contact spring (40) connected to the first contact member (14) is in contact with the second contact member (16) and thus short-circuits the terminals of the electrical igniter (11) and wherein the connector (12) is provided with a spreading member (48) which when the connector (12) is attached spreads the contact spring (14) radially away from the second contact member (16), characterized in that the first contact member (14) is connected to a cylindrical outer contact bush (32) into which an inner contact bush (44) of the connector (12) is insertable, and in that the outer contact bush (32) comprises a radial bottom (34) out of which the contact spring (40) is stamped.

2. Plug connection according to claim 1, characterized in that the spreading member (48) is formed by an insulating bush which surrounds a contact sleeve (46) complementary to the second contact member (16) and is made tapered at its end facing the gas generator (10), and that the contact spring (40) is bent over at its free end.

3. Plug connection according to claim 2, characterized in that the insulating bush (48) is provided with a peripheral groove (50) into which the bent-over end of the contact spring (40) engages.

4. Plug connection according to any one of the preceding claims, characterized in that the radial bottom (34) of the outer contact bush is provided with an opening for pushing through the first end of the first contact member (14) formed as pin and the second contact member (16) formed as contact pin projects coaxially with the outer contact bush (32) through the window (42) formed in the radial bottom (34) by stamping out the contact spring (40).

5. Plug connection according to claim 4, characterized in that the radial bottom (34) of the outer contact bush (32) is provided with an opening for pushing through a securing pin (15) projecting out of the gas generator (10).

## Revendications

1. Connexion électrique à un générateur pyrotechnique de gaz (10) pourvu d'une amorce électrique (11), pour systèmes de retenue dans des véhicules automobiles, comportant deux pièces de contact (14, 16) partant de l'amorce électrique et un connecteur (12), dans laquelle, lorsque le connecteur (12) n'est pas enfiché, un ressort de contact (40) relié à la première pièce de contact (14) est en contact avec la deuxième pièce de contact (16) et court-circuite ainsi les branchements de l'amorce électrique (11) et dans laquelle le connecteur (12) est pourvu d'une pièce d'écartement (48) qui, lorsque le connecteur (12) est enfiché, écarte radialement le ressort de contact (14) de la deuxième pièce de contact (16), caractérisée en ce que la première pièce de contact (14) est reliée à une douille de contact (32) cylindrique extérieure, dans laquelle peut être introduite une douille de contact (44) intérieure du connecteur (12) et en ce que la douille de contact extérieure (32) présente un fond radial (34) dans lequel est découpé le ressort de contact (40).

2. Connexion selon la revendication 1, caractérisée en ce que la pièce d'écartement (48) est formée par une douille isolante qui entoure un manchon de contact (46) complémentaire de la deuxième pièce de contact (16) et est rétrécie à son extrémité tournée vers le générateur de gaz (10), et en ce que le ressort de contact (40) est replié à son extrémité libre.

3. Connexion selon la revendication 2, caractérisée en ce que la douille isolante (48) est pourvue d'une rainure périphérique (50) dans laquelle s'engage l'extrémité repliée du ressort de contact (40).

4. Connexion selon l'une des revendications précédentes, caractérisée en ce que le fond radial (34) de la douille de contact extérieure est pourvu d'une ouverture en vue du passage de l'extrémité libre de la première pièce de contact (14) en forme de broche et la seconde pièce de contact (16) en forme de broche traverse, coaxialement à la douille extérieure de contact (32), la fenêtre (42) formée dans le fond (34) radial, par découpage du ressort de contact (40).

5. Connexion selon la revendication 4, caractérisée en ce que le fond radial (34) de la douille extérieure de contact (32) est pourvu d'une ouverture pour le passage d'un doigt de fixation (15) saillant du générateur de gaz (10).
